# EUROPÄISCHE PATENTSCHRIFT

(11) **EP 2 188 881 B1**
(45) Veröffentlichungstag und Bekanntmachung des Hinweises auf die Patenterteilung: **08.10.2014**
(21) Anmeldenummer: 08785245.5
(22) Anmeldetag: 31.07.2008
(51) Int. Cl.: H02K 1/27, H02K 1/28, H02K 15/03

(54) **ELEKTROMOTOR UND VERFAHREN ZUR HERSTELLUNG EINES ELEKTROMOTORS**
ELECTRIC MOTOR AND METHOD FOR THE PRODUCTION OF AN ELECTRIC MOTOR
MOTEUR ÉLECTRIQUE ET PROCÉDÉ DE FABRICATION D'UN MOTEUR ÉLECTRIQUE

(30) Priorität: 15.08.2007 DE 102007038687
(43) Veröffentlichungstag der Anmeldung: 26.05.2010
(73) Patentinhaber: SEW-EURODRIVE GmbH & Co. KG, 76646 Bruchsal (DE)
(72) Erfinder: EPSKAMP, Torsten, 75015 Bretten (DE); NESTLER, Helmut, 76646 Bruchsal (DE)
(74) Vertreter: Tüngler, Eberhard
(86) Internationale Anmeldenummer: PCT/EP2008/006303
(87) Internationale Veröffentlichungsnummer: WO 2009/021634

(56) Entgegenhaltungen:
- EP-A- 1 737 105
- JP-A- 10 014 181
- JP-A- 63 257 444
- US-A- 4 009 406
- US-A- 4 782 259
- US-A1- 2002 047 431

## Beschreibung

Die Erfindung betrifft einen Elektromotor und ein Verfahren zur Herstellung eines Elektromotors.

Es sind Synchronmotoren bekannt, deren Rotor Permanentmagnete umfassen.

Hierzu sind aus der US 2002/0047431A1 am Rotor zueinander in Umfangsrichtung versetzt angeordnete Magnetringe bekannt. Allerdings ist dort nichts über die Verbindung zwischen Rotor und Magnetring offenbart.

Aus der EP 1 737 105 A2 ist ein Magnetring bekannt, der an seiner Innenseite Nuten aufweist, mit denen dieser aufsteckbar ist auf ein Rotorblechpaket, an welchem radial herausstehende Nasen für das Aufstecken der Nuten des Magnetrings ausgebildet sind.

Der Erfindung liegt daher die Aufgabe zugrunde, eine Synchronmotor weiterzubilden, so dass er einfach und wenig aufwendig herstellbar ist.

Erfindungsgemäß wird die Aufgabe bei dem Elektromotor nach den in Anspruch 1 und bei dem Verfahren nach den in Anspruch **8** angegebenen Merkmalen gelöst.

Wichtige Merkmale der Erfindung bei dem Elektromotor sind, dass er einen Rotor umfasst, der mindestens einen Ring aus Permanentmagnetmaterial umfasst, und einen Stator, insbesondere Ständer,
wobei in Umfangsrichtung abwechselnde Magnetpole ausgeprägt sind,
wobei in einem ersten axialen Bereich die in Umfangsrichtung vorgesehene Abfolge der Magnetpole einen Versatz aufweist gegenüber der entsprechenden Abfolge in einem zweiten axialen Bereich.

Von Vorteil ist dabei, dass Rastmomente unterdrückt werden, die Drehmomentschwankungen verringert werden, die Herstellung einfach und mit geringem Aufwand ausführbar ist. Außerdem sind die Rotoren beliebig lang ausführbar und es ist trotzdem dieselbe Aufmagnetisierungsvorrichtung verwendbar.

Bei einer vorteilhaften Ausgestaltung sind der erste und zweite axiale Bereich gleich groß. Von Vorteil ist dabei, dass in einfacher Weise die Drehmomentwelligkeit unterdrückbar ist.

Bei einer vorteilhaften Ausgestaltung weisen die Magnetpole in axialer Richtung einen Verlauf mit verschwindendem oder nicht-verschwindendem Schrägungswinkel auf. Von Vorteil ist dabei, dass zwar ein einfach herstellbarer gerader Verlauf ohne Schrägungswinkel verwendbar ist zur Reduzierung von Rastmomenten. Jedoch ist ein zusätzlich etwas aufwendiger herstellbarer Schrägungswinkel ebenfalls verwendbar. Allerdings steigt dann der Aufwand bei der Magnetisierungsvorrichtung, da bei unterschiedlichen axialen Längen unterschiedliche Magnetisierungsspulen notwendig sind.

Bei einer vorteilhaften Ausgestaltung ist der Elektromotor als Innenläufer oder als Außenläufer vorgesehen. Von Vorteil ist dabei, dass die Erfindung bei beiden Sorten von Elektromotoren anwendbar ist.

**Erfindungsgemäß** sind **die** Ringe axial auf den Rotor aufgeschoben und stoffschlüssig und/oder formschlüssig mit dem Rotor verbunden. Von Vorteil ist dabei, dass einerseits eine Klebeverbindung und zusätzlich auch eine formschlüssige Verbindung ausführbar ist. Somit ist bei Versagen einer der Verbindungen die andere tragfähig. Die formschlüssige Verbindung ist außerdem zur Einhaltung des Versatzes verwendbar und somit der Versatz in einfacher Weise vorgebbar.

Bei einer vorteilhaften Ausgestaltung ist jeder der Ringe gleichartig ausgeführt. Von Vorteil ist dabei, dass nur eine Sorte von Ringen im Lager vorgehalten werden muss. Daraus sind beliebig lange Rotoren herstellbar, indem die gewünschte Anzahl von Ringen auf den Rotor aufgeschoben und verbunden werden.

**Erfindungsgemäß** weisen die Ringe an ihrer Innenseite oder Außenseite eine Nut auf, die mit einem Führungselement im Eingriff steht. Von Vorteil ist dabei, dass die formschlüssige Verbindung in besonders einfacher Weise ausführbar ist.

**Erfindungsgemäß** ist mindestens ein erstes Führungselement in dem ersten axialen Bereich vorgesehen und mindestens ein zweites Führungselement in dem zweiten axialen Bereich vorgesehen, wobei erstes und zweites Führungselement in Umfangsrichtung zueinander einen Versatz aufweisen. Von Vorteil ist dabei, dass Passfedern oder Nutensteine als Führungselemente beispielhaft verwendbar sind und hierdurch der Versatz vorgebbar ist.

Bei einer vorteilhaften Ausgestaltung sind die Ringe vor dem Aufstecken und/oder Verbinden mit dem Rotor magnetisiert. Von Vorteil ist dabei, dass die beim Aufstecken bewirkten Magnet-Kräfte von den Führungselementen ableitbar sind und somit ein einfaches Herstellen und hochgenaues Einhalten des Versatzes bewerkstelligt ist.

**Erfindungsgemäß** sind die Ringe nach dem Aufstecken und/oder Verbinden mit dem Rotor magnetisiert. Von Vorteil ist dabei, dass beim Aufstecken keine Magnet-Kräfte wirken und außerdem keine Führungselemente zwecks Vorgeben eines Versatzes vorhanden sein müssen. Eine bloße Klebeverbindung ist ausreichend. Die Ringe sind in Umfangsrichtung mit konstanter Dicke ausführbar. Alternativ ist bei gewünschter erhöhter Sicherheit gegen Ausfall der Klebeverbindung zusätzlich doch noch ein Formschluss mittels der Führungselemente vorsehbar.

Bei einer vorteilhaften Ausgestaltung beträgt der Versatz 180°/ KGV(2p,N1), wobei KGV(2p,N1) das kleinste gemeinsame Vielfache der Rotorpolzahl 2p und der Ständernutzahl N1 ist. Von Vorteil ist dabei, dass bei diesem Versatz das Rastmoment besonders klein ist und die Drehmomentwelligkeit ebenfalls.

Wichtige Merkmale bei dem Verfahren zur Herstellung eines Elektromotors sind, dass **zuerst** ein oder mehrere Ringe auf einen Rotor aufgesteckt und verbunden werden **und dann,**
- in einem ersten Schritt ein erster axialer Bereich magnetisiert wird, wobei eine Abfolge von in Umfangsrichtung abwechselnd magnetisierten Polen erzeugt wird
- in einem zweiten Schritt der Rotor um einen Versatzwinkel gedreht wird,
- in einem dritten Schritt der erste Schritt für einen zweiten axialen Bereich wiederholt wird.

Von Vorteil ist dabei, dass eine einfache kleine Magnetisierungsvorrichtung ausreicht, die nur einen Teil der axialen Länge magnetisieren muss. Der Versatz ist durch eine einfache Drehung realisierbar.

Wenn die Magnetisierungsvorrichtung in axialer Richtung kleiner ist als der erste axiale Bereich, wird zeitlich nacheinander jeder Teilbereich des ersten axialen Bereichs magnetisiert, wobei keine Drehung des Rotors ausgeführt wird. Erst vor der Magnetisierung der entsprechenden Teilbereiche des zweiten axialen Bereichs wird der Rotor um den Versatzwinkelwert gedreht.

Bei einer vorteilhaften Ausgestaltung wird für das Magnetisieren eine Magnetisiervorrichtung verwendet und nach dem dritten Schritt der Rotor in einen Motor eingebaut. Von Vorteil ist dabei, dass beim Aufstecken der Ringe keine Magnet-Kräfte wirken und der Rotor erst nach seiner Herstellung magnetisiert wird.

Im letzten Schritt ist der Rotor dann in den Stator einführbar zur Bildung des Synchronmotors.

Weitere Vorteile ergeben sich aus den Unteransprüchen.

Die Erfindung wird nun anhand von Abbildungen näher erläutert:

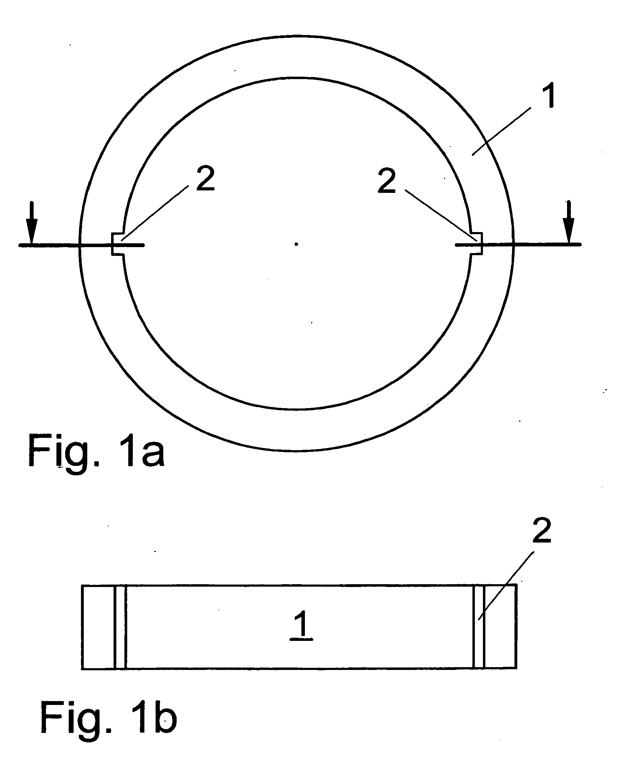

In der Figur 1 a ist ein Querschnitt durch einen Ring 1 eines erfindungsgemäßen Elektromotors gezeigt.

In Figur 1b ist die zugehörige Draufsicht gezeigt.

In Figur 2a ist eine Draufsicht von oben auf den Rotor 22 mit Rotorwelle 23 aus radialer Richtung gezeigt.

In Figur 2b ist eine Ansicht mit Blickrichtung in Achsrichtung gezeigt.

Der Ring 1 weist an seiner Innenseite Vertiefungen auf, die als Nuten 2 ausgeführt sind. Rotor 22 und Rotorwelle 23 sind miteinander verbunden. Am Rotor 22 sind Führungselemente 20 und 21 angebracht, die zur formschlüssigen Verbindung mit den Vertiefungen, insbesondere Nuten 2, der Ringe 1 vorgesehen sind. Dabei ist die formschlüssige Verbindung in Umfangsrichtung ausgeprägt und ermöglicht somit das Übertragen von Drehmoment.

Das Führungselement 20 eines ersten Rings ist in Umfangsrichtung versetzt angeordnet zum Führungselement 21 eines zweiten Rings.

Beispielhaft sind die Führungselemente ausführbar als axial ausgedehnt vorgesehene Nutensteine oder Passfedern, die in entsprechende axial verlaufende Nuten des Rotors 22 vorgesehen sind.

Somit sind die Ringe axial aufsteckbar angeordnet.

Die Ringe sind jeweils gleich ausgeführt und weisen in Umfangsrichtung abwechselnd magnetisierte Bereiche auf, wobei die Magnetisierungsrichtung im Wesentlichen radial ausgeprägt ist und eine Rotorpolzahl von 2p aufweist, wobei p eine ganze Zahl ist.

Die Ringe sind als Permanentmagnete ausgeführt und werden im letzten Herstellschritt magnetisiert.

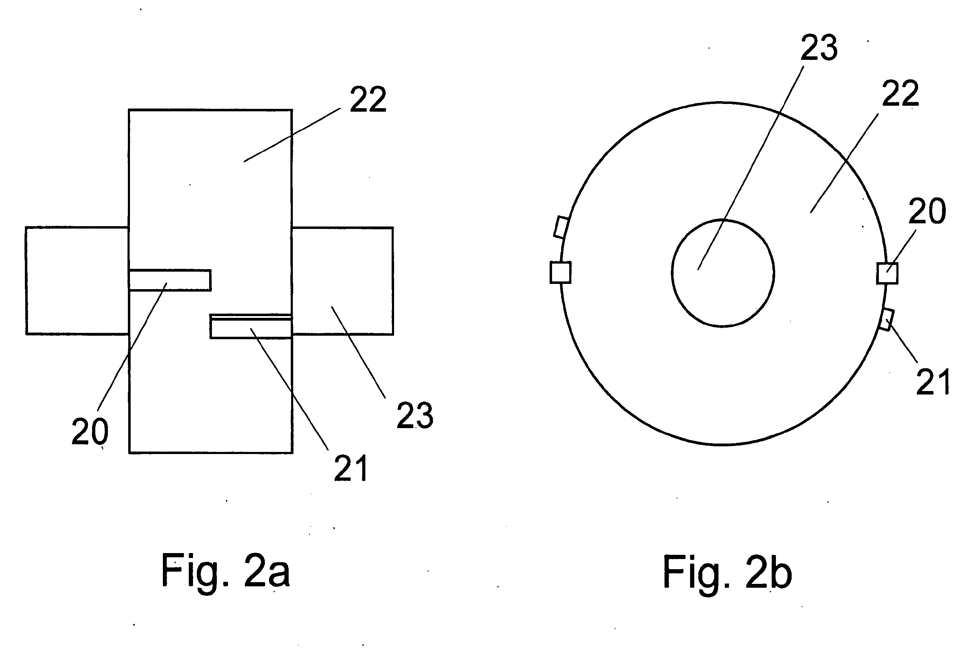

In den Figuren 2a und 2b ist der Rotor ein Innenläufer und somit der Elektromotor ein entsprechend ausgeführter Synchronmotor. Die Statorwicklung ist mit einer Ständernutzahl N1 ausgeführt.

Die vorteilige Dimensionierung hat sich bei einem Versatz von 180°/ KGV(2p.N1) herausgestellt. Hierbei wird also das kleinste gemeinsame Vielfache der Rotorpolzahl und der Ständernutzahl bestimmt und 180° dividiert durch dieses kleinste gemeinsam Vielfache.

Die axiale Länge des ersten Ringes und die axiale Länge des zweiten Ringes ist gleich ausgeführt.

Bei einem weiteren erfindungsgemäßen Ausführungsbeispiel werden statt jeweils einem einzigen ersten Ring mehrere Ringe verwendet. Somit lassen sich nach Bedarf längere Rotoren herstellen. Außerdem muss im Lager nur eine Sorte von Ringen vorgehalten werden und die Länge ist durch die Anzahl der verwendeten Ringe bestimmt. Da die axiale Länge der Ringbereiche mit Versatz gleich ist, ist die Gesamtzahl der Ringe eine gerade Zahl.

Bei einem weiteren erfindungsgemäßen Ausführungsbeispiel werden die Ringe auf den Rotor aufgeklebt, also stoffschlüssig verbunden. Die Führungselemente dienen hierbei nur zur Montagehilfe zum Einhalten des definierten Versatzes.

Bei einem weiteren erfindungsgemäßen Ausführungsbeispiel werden keine Führungselemente verwendet, sondern es werden mindestens ein oder mehr unmagnetisierte Ringe auf den Rotor aufgeklebt. Die Anzahl der Ringe ist hierbei unerheblich. Die Ringe erstrecken sich über einen axialen Bereich. Nach Herstellung des Rotors wird dieser in eine Magnetisiervorrichtung eingebracht, die in einem ersten Herstellungsschritt eine erste Hälfte des axialen Bereichs magnetisiert.

Danach wird die zweite Hälfte magnetisiert, wobei allerdings ein Versatz in Umfangsrichtung ausgeführt wird. Beispielhaft wird nach dem ersten Schritt der Rotor axial um den Betrag der Hälfte der axialen Länge verschoben und um den Versatz verdreht. Dann wird in einem letzten Schritt der erste Schritt wiederholt.

Vorzugsweise wird als Werkstoff der Ringe ein isotroper Magnetisierbarer Werkstoff verwendet.

Bei einem weiteren erfindungsgemäßen Ausführungsbeispiel wird statt eines Innenläufers ein Außenläufer ausgeführt. Die vorgenannte Beschreibung wird entsprechend angewendet. Statt der Führungselemente an der Außenseite sind diese dann an der Innenseite vorgesehen. Die Ringe sind dann statt an der Innenseite an ihrer Außenseite mit dem Rotor verbunden. Der Stator befindet sich dann im Inneren des vom Rotor umgebenen Bereiches.

Der Verlauf der Nordpole und Südpole in axialer Richtung ist in allen beschriebenen Fällen gerade ausgeführt. Es liegt also kein Schrägungswinkel des Verlaufes vor.

Bei einem weiteren erfindungsgemäßen Ausführungsbeispiel wird zusätzlich noch ein Schrägungswinkel vorgesehen. Somit ist ein weiter verbessertes Unterdrücken von Rastmomenten ermöglicht.

### Bezugszeichenliste

- 1: Ring
- 2: Nut
- 20: Führungselement
- 21: Führungselement
- 22: Rotor
- 23: Rotorwelle

## Patentansprüche

1. Elektromotor,
umfassend einen Rotor (22), der **Ringe (1)** aus Permanentmagnetmaterial umfasst, und einen Stator, insbesondere Ständer,
wobei in Umfangsrichtung abwechselnde Magnetpole ausgeprägt sind,
**wobei** in einem ersten axialen Bereich die in Umfangsrichtung vorgesehene Abfolge der Magnetpole einen Versatz aufweist gegenüber der entsprechenden Abfolge in einem zweiten axialen Bereich,
**wobei die Ringe (1) axial auf den Rotor (22) aufgeschoben sind und stoffschlüssig und/oder formschlüssig mit dem Rotor (22) verbunden sind,**
**wobei die Ringe (1) an ihrer Innenseite oder Außenseite eine Nut (2) aufweisen, die mit einem Führungselement (20, 21) im Eingriff steht, das jeweils wiederum mit entsprechend axial verlaufenden Nuten (2) im Rotor (22) in Eingriff steht,**
**wobei mindestens ein erstes Führungselement (20, 21) in dem ersten axialen Bereich vorgesehen ist und mindestens ein zweites Führungselement (20, 21) in dem zweiten axialen Bereich vorgesehen ist,**
**wobei erstes und zweites Führungselement (20, 21) in Umfangsrichtung zueinander einen Versatz aufweisen,**
**wobei die Führungselemente (20, 21) Nutensteine oder Passfedern sind.**

2. Elektromotor nach Anspruch 1,
**dadurch gekennzeichnet, dass**
der erste und zweite axiale Bereich gleich groß sind.

3. Elektromotor nach mindestens einem der vorangegangenen Ansprüche,
**dadurch gekennzeichnet, dass**
die Magnetpole in axialer Richtung einen Verlauf mit verschwindendem oder nicht-verschwindendem Schrägungswinkel aufweisen.

4. Elektromotor nach mindestens einem der vorangegangenen Ansprüche,
**dadurch gekennzeichnet, dass**
der Elektromotor als Innenläufer oder als Außenläufer vorgesehen ist.

5. Elektromotor nach mindestens einem der vorangegangenen Ansprüche,
**dadurch gekennzeichnet, dass**
jeder der Ringe (1) gleichartig ausgeführt ist.

6. Elektromotor nach mindestens einem der vorangegangenen Ansprüche,
**dadurch gekennzeichnet, dass**
der Versatz 180°/ KGV(2p,N1) beträgt, wobei KGV(2p,N1) das kleinste gemeinsame Vielfache der Rotorpolzahl 2p und der Ständernutzahl N1 ist.

7. Elektromotor nach mindestens einem der vorangegangenen Ansprüche,
**dadurch gekennzeichnet, dass**
der Elektromotor ein Synchronmotor ist.

8. Verfahren zur Herstellung eines Elektromotors **nach mindestens einem der vorangegangenen Ansprüche,**
wobei zuerst ein oder mehrere Ringe (1) auf einen Rotor aufgesteckt und verbunden werden **und dann**
- in einem ersten Schritt ein erster axialer Bereich magnetisiert wird, wobei eine Abfolge von in Umfangsrichtung abwechselnd magnetisierten Polen erzeugt wird
- in einem zweiten Schritt der Rotor um einen Versatzwinkel gedreht wird,
- in einem dritten Schritt der erste Schritt für einen zweiten axialen Bereich wiederholt wird.

9. Verfahren nach Anspruch 8,
**dadurch gekennzeichnet, dass**
für das Magnetisieren eine Magnetisiervorrichtung verwendet wird und nach dem dritten Schritt der Rotor in einen Motor eingebaut wird.

## Claims

1. Electric motor,
comprising a rotor (22), which comprises rings (1) made of permanent magnetic material, and a stator, in particular stator frame,
wherein alternate magnetic poles are formed in the circumferential direction,
wherein in a first axial region the succession of magnetic poles provided in the circumferential direction has an offset with respect to the corresponding succession in a second axial region,
wherein the rings (1) are axially slipped onto the rotor (22) and connected to the rotor (22) in a materially joined and/or form-fitting manner,
wherein the rings (1) have at their inner side or outer side a slot (2) which engages with a guide element (20, 21), which in each case, in turn, engages with correspondingly axially running slots (2) in the rotor (22),
wherein at least one first guide element (20, 21) is provided in the first axial region and at least one second guide element (20, 21) is provided in the second axial region,
wherein first and second guide element (20, 21) have an offset relative to one another in the circumferential direction, wherein the guide elements (20, 21) are sliding blocks or feather keys.

2. Electric motor according to Claim 1,
**characterised in that**
the first and second axial region are of the same size.

3. Electric motor according to at least one of the preceding claims,
**characterised in that**
the magnetic poles have in the axial direction a course with a vanishing or non-vanishing skew angle.

4. Electric motor according to at least one of the preceding claims,
**characterised in that**
the electric motor is provided as an internal rotor or as an external rotor.

5. Electric motor according to at least one of the preceding claims,
**characterised in that**
each of the rings (1) is of the same design.

6. Electric motor according to at least one of the preceding claims,
**characterised in that**
the offset is 180°/LCM(2p,N1), where LCM(2p,N1) is the least common multiple of the rotor pole number 2p and the stator slot number N1.

7. Electric motor according to at least one of the preceding claims,
**characterised in that**
the electric motor is a synchronous motor.

8. Method for the production of an electric motor according to at least one of the preceding claims,
wherein firstly one or more rings (1) are slipped onto a rotor and connected and then
- in a first step, a first axial region is magnetised, wherein a succession of alternately magnetised poles in the circumferential direction is produced
- in a second step, the rotor is rotated about an offset angle,
- in a third step, the first step is repeated for a second axial region.

9. Method according to Claim 8,
**characterised in that**
a magnetising device is used for the magnetising, and after the third step the rotor is installed in a motor.

## Revendications

1. Moteur électrique
comprenant un rotor (22) qui inclut des bagues (1) en un matériau à magnétisation permanente, et un stator se présentant notamment comme un support,
sachant que des pôles magnétiques alternants sont ménagés en saillie dans la direction périphérique,
sachant que, dans une première région axiale, la succession desdits pôles magnétiques, prévue dans la direction périphérique, accuse un décalage par rapport à la succession correspondante dans une seconde région axiale,
les bagues (1) étant enfilées axialement sur le rotor (22), et étant reliées audit rotor (22) par solidarisation matérielle et/ou par complémentarité de formes,
lesdites bagues (1) comportant, à leur face intérieure ou à leur face extérieure, une rainure (2) en prise avec un élément de guidage (20, 21) qui, à son tour, est respectivement en prise avec des rainures (2) pratiquées dans le rotor (22) et offrant un tracé correspondant dans le sens axial,
au moins un premier élément de guidage (20, 21) étant prévu dans la première région axiale, et au moins un second élément de guidage (20, 21) étant prévu dans la seconde région axiale,
lesdits premier et second éléments de guidage (20, 21) accusant un décalage mutuel dans la direction périphérique,
lesdits éléments de guidage (20, 21) se présentant comme des coulisseaux ou comme des clavettes.

2. Moteur électrique selon la revendication 1,
**caractérisé par le fait que**
les première et seconde régions axiales possèdent des dimensionnements identiques.

3. Moteur électrique selon au moins l'une des revendications précédentes,
**caractérisé par le fait que**
les pôles magnétiques offrent, dans le sens axial, un profil à angle d'inclinaison évanescent ou non évanescent.

4. Moteur électrique selon au moins l'une des revendications précédentes,
**caractérisé par le fait que**
ledit moteur électrique est prévu en tant que rotor intérieur ou rotor extérieur.

5. Moteur électrique selon au moins l'une des revendications précédentes,
**caractérisé par le fait que**
chacune des bagues (1) présente une réalisation de type similaire.

6. Moteur électrique selon au moins l'une des revendications précédentes,
**caractérisé par le fait que**
le décalage mesure 180°/KGV (2p, N1), 180°/KGV (2p, N1) étant le plus petit commun multiple du nombre 2p de pôles rotoriques et du nombre N1 de rainures statoriques.

7. Moteur électrique selon au moins l'une des revendications précédentes, **caractérisé par le fait que**
ledit moteur électrique est un moteur synchrone.

8. Procédé de fabrication d'un moteur électrique conforme à au moins l'une des revendications précédentes,
dans lequel une ou plusieurs bague(s) (1) est (sont) tout d'abord emboîtée(s) sur un rotor, puis reliée(s),
après quoi
- une première région axiale est magnétisée au cours d'une première étape, une succession de pôles, magnétisés en alternance dans la direction périphérique, étant alors engendrée,
- ledit rotor est animé d'une rotation d'un angle de décalage, au cours d'une deuxième étape,
- ladite première étape est réitérée au cours d'une troisième étape, pour une seconde région axiale.

9. Procédé selon la revendication 8,
**caractérisé par le fait**
**qu'**un dispositif de magnétisation est utilisé en vue de la magnétisation, et le rotor est intégré dans un moteur à l'issue de la troisième étape.
